Europäisches Patentamt

European Patent Office

Office européen des brevets

(11) Veröffentlichungsnummer: **0 340 335 B1**

## (12) EUROPÄISCHE PATENTSCHRIFT

(45) Veröffentlichungstag der Patentschrift: **16.12.92**

(51) Int. Cl.5: **B29C 47/88**

(21) Anmeldenummer: **88114907.4**

(22) Anmeldetag: **13.09.88**

(54) **Hochleistungskühlverfahren und Vorrichtung für die Herstellung von bi-orientierten Folien aus hoch- und mittelmolaren Thermoplasten.**

(30) Priorität: **06.05.88 DE 3815415**

(43) Veröffentlichungstag der Anmeldung:
**08.11.89 Patentblatt  89/45**

(45) Bekanntmachung des Hinweises auf die
Patenterteilung:
**16.12.92 Patentblatt  92/51**

(84) Benannte Vertragsstaaten:
**DE ES FR GB IT**

(56) Entgegenhaltungen:
**EP-A- 0 180 029**
**DE-U- 8 526 011**
**FR-A- 2 440 266**
**GB-A- 2 166 081**

**PATENT ABSTRACTS OF JAPAN, Band 8, Nr. 22 (M-272)[1459], 31. Januar 1984; & JP-A-58 183 224 (IDEMITSU SEKIYU KAGAKU K.K.) 26-10-1983**

**PATENT ABSTRACTS OF JAPAN, Band 6, Nr. 249 (M-177)[1127], 8. Dezember 1982; & JP-A-57 146 626 (SHINDAIKIYOUWA SEKIYU KA-GAKU K.K.) 10-09-1982**

(73) Patentinhaber: **Paul Kiefel GmbH, Maschinen-fabrik**
**Cornelius-Heyl-Strasse 49**
**W-6520 Worms/Rhein(DE)**

(72) Erfinder: **Schaeffer, Gérard, Dr. Dr.-Ing.**
**Rebgartenstrasse 27**
**W-6520 Worms 25(DE)**
Erfinder: **Trunk, Georg, Dipl.-Ing.**
**Mendelssohn Strasse 12**
**W-6520 Worms 21(DE)**
Erfinder: **Roth, Klemenz**
**Kreuzweide 2**
**W-6520 Worms 25(DE)**

(74) Vertreter: **Ratzel, Gerhard, Dr.**
**Seckenheimer Strasse 36a**
**W-6800 Mannheim 1(DE)**

PATENT ABSTRACTS OF JAPAN, Band 8, Nr. 20 (M-271)[1457], 27. Januar 1984; & JP-A-58 179 620 (IDEMITSU SEKIYU KAGAKU K.K.) 20-10-1983

PATENT ABSTRACTS OF JAPAN, Band 8, Nr. 22 (M-272)[1459], 31. Januar 1984; & JP-A-58 183 222 (IDEMITSU SEKIYU KAGAKU K.K.) 26-10-1983

PATENT ABSTRACTS OF JAPAN, Band 8, Nr. 32 (M-275)[1469], 10. Februar 1984; & JP-A-58 188 626 (NISSAN KAYAKU KOGYO K.K.) 04-11-1983

PATENT ABSTRACTS OF JAPAN, Band 11, Nr. 377 (M-649)[2824], 9. Dezember 1987; & JP-A-62 149 418 (ASAHI CHEM. IND. CO. LTD) 03-07-1987

## Beschreibung

Die vorliegende Erfindung betrifft ein Hochleistungskühlverfahren gemäß dem Oberbegriff des Anspruchs 1 und eine Vorrichtung für die Herstellung von bi-orientierten Folien aus hoch- und mittelmolaren Thermoplasten gemäß dem Oberbegriff des Anspruchs 6.

Es sind konventionelle Herstellungsverfahren von bi-axial orientierten Folien aus mittel- und hochmolekularen HDPE-, LDPE-Polymeren und LLDPE-Mischungen in der"Fahrweise mit langem Hals" bekannt. Durch die sogenannte "Fahrweise mit langem Hals" werden die mechanischen und physikalischen Folieneigenschaften verbessert, die Ausziehfähigkeit der Polymere erhöht und mit LDPE- und LLDPE-Polymertypen werden bessere optische Eigenschaften erzielt.
Im sogenannten Halsbereich von bekannten Vorrichtung wird der Schlauch auf den gewünschten Durchmesser aufgeblasen. Im Übergangsbereich vom Hals zum Folienschlauch findet die Orientierung der Folie statt.

Desweiteren wurden Versuche unternommen um höhere Extrusionsleistungen bei besseren Blasenstabilitäten zu erreichen, wobei die Erhöhung der spezifischen Düsenleistung nur mit der Erhöhung der Außenkühlung des Schlauches erreicht werden kann, d.h. mit der Erhöhung der Luftgeschwindigkeit an den Außenflächen des Halses und des Übergangsbereiches vom Hals zum Folienschlauch.

Die maximale Luftgeschwindigkeit und somit die maximale Kühlleistung sind jedoch durch die Stabilität der Blase sehr schnell begrenzt. Bei zu hohen Kühlluftströmen erzeugt die Halsinstabilität erhebliche Auf- und Abwärtsbewegungen der Blase, die dann zu breiten Schwankungen und Faltenbildungen der Folie führen und schließlich zum Abriß des Schlauches. Die Leistungsgrenze bei der konventionellen Fahrweise mit "langem Hals" liegt zwischen 1,5 und 2,3 kg/cm, je nach Aufblasverhältnis, Folienstärke, Polymertyp und Raumtemperatur.

Mit den japanischen Patenten 55/2180, 53/133.275 und 59/136.224 sind Verfahren bekannt, die eine Verbesserung der Blasenstabilität sowie die Erhöhung der spezifischen Düsenleistung durch die Einführung eines Innenschleppdornes im Halsbereich erzielt wurden. Hierbei erhöht sich die Leistungsgrenze jedoch nur um 20% gegenüber der konventionellen Fahrweise auf etwa 1,8 bis 2,75 kg/cm.

Weitere Leistungserhöhungen mit noch guten Blasenstabilitäten werden durch die Kombination einer Außenkühlung unmittelbar nach dem Austritt der Schmelze aus der Düse, einer Stabilisierung mit einem Innenschleppdorn und einer zweiten Außenkühlung an der Blase bzw. im Übergangsbereich erzielt.

Solche Verfahren sind im japansichen Patent 59/171.620 und im US-Patent 4.626.397 beschrieben. Diese Verfahren, welche einen zweiten Kühlring aufweisen, sind nicht sehr bedienungsfreundlich, besonders beim Anfahren der Anlage und bei der Programmumstellung. Der zweite Kühlring im Bereich des Schleppdorns bringt Bedienprobleme mit sich.

Gemäß der DE-PS 22 62 190, DE-PS 23 06 834, DE-PS 26 10 818 und DE-PS 24 59 785 sind Verfahren beschrieben, die für Hochleistungs-Extrusion von LDPE- und LLDPE mit der konventionellen Blasenform bzw. mit einem kurzen Hals dienen. Die Fahrweise mit dem sogenannten "langen Hals", mit einer Höhe von 6- bis 10-fachen Düsendurchmessers ist mit diesem Verfahren aufgrund der Blaseninstabilität nur mit Einschränkungen möglich.

Eine Verbesserung bezüglich der Blasenstabilität wurde durch das US-Patent 4.606.879 und durch das DE-GM 85 25 622.6 erzielt. Jedoch sind beide Systeme auch nicht besonders bedienungsfreundlich, wegen des zweiten Kühlringes bzw. wegen der Kammern mit Iris-Blenden. Auch die Produktionsprogrammumstellung sind bei beiden Systemen empfindlich. Ein weiterer Nachteil, speziell bei DE-GM 85 25 622.6 ist die Kondensation der Monomere und der Additive der Polymere auf den Innenflächen der Kammern sowie auf den Iris-Blenden. Um die Funktion des Systems zu gewährleisten, ist eine öftere Reinigung der Vorrichtung notwendig.

Aus der JP-A 58183224 ist ein Hochleistungskühlverfahren bzw. eine Vorrichtung für ein solches Verfahren bekannt, mittels dem die Herstellung von biorientierten Folien aus hoch- und mittelmolekularen Thermoplasten mit der sogenannten Fahrweise mit langem Hals, auf einer Folienblasanlage möglich ist, welche aus einem Extruder mit Blaskopf besteht, geeignet für die Plastifizierung und Formgebung des Kunststoffs, mit einer Außenkühlung der Folienblase mittels eines Hochleistungskühlringes, mit einem Innenkühlsystem sowie einem Kalibrierkorb für die Führung der Folienblase und die Steuerung der Liegebreite der Folie. Es ist hierbei ein Werkzeug vorgesehen, das ein aufgesetztes Rohr mit einem darin angeordneten, in das Werkzeug eingeführten und mit einem Saugrohr in Verbindung stehenden Innenrohr aufweist.

Wesentlich für dieses bekannte Verfahren ist es, daß der Folienschlauch im sogenannten Halsbereich auf den gewünschten Durchmesser aufgeblasen wird. Im Übergangsbereich vom Hals zum Folienschlauch findet die Orientierung der Folie statt. Die geringe Stabilität der Blase begrenzt die Strömungsgeschwindigkeit der zur Kühlung des Folienschlauchs dienenden Luft und damit die maximale Kühlleistung der Außenkühlung, was wiederum die Extrusionsleistung beeinträchtigt. Damit der Folienschlauch bzw. die Blase einigermaßen stabil aufgebaut wird, ist eine Art Innenschleppdorn vorgesehen, der wiederum im Blasenbereich aufwendig ausgebildete Düsenkörper aufweist. Die bekannte Vorrichtung ist einerseits konstruktiv aufwendig, andererseits aufgrund der kompliziert aufgebauten Düsenkörper äußerst wartungsintensiv. Schließlich verursacht der weitgehend unkontrollierte Übergang vom Hals zum Folienschlauch Faltenbildung und Inhomogenitäten in der Folienwandung.

Aus der JP-A-57146626 ist eine Vorrichtung zum Extrudieren von Folien bekannt, bei der zur Führung des Folienhalses ein Schleppdorn vorgesehen ist. Ein hier verwendeter Schleppdorn dient nicht der Folienaufweitung, sondern ausschließlich der inneren Stabilisierung der später aufzublasenden Folie. Die Anordnung des Schleppdorns führt zu einer anders gearteten Folienblasenbildung.

Der vorliegenden Erfindung liegt daher die Aufgabe zugrunde, ein Verfahren und eine Vorrichtung zur Hochleistungskühlung für die Herstellung von bi-orientierten Folien aus hoch- und mittelmolekularen Thermoplasten bereitzustellen, die die vorbeschriebenen Nachteile beseitigt und dabei eine Kombination einer intensiven Außenkühlung, die unmittelbar nach dem Austritt der Schmelze aus dem Werkzeug wirksam ist, einen Stabilisierungsdorn, der im Bereich des Halses unmittelbar vor der Ausweitung der Blase positioniert ist und einer sehr wirksamen Innenkühlung, die unmittelbar nach diesem Schleppdorn im Bereich der Ausweitung der Blase aktiv ist, aufweist.

Mit dieser neuen Vorrichtung nebst vorgeschlagenem Verfahren wird eine bedeutende Erhöhung der spezifischen Düsen-Extrusionsleistung erreicht, die mechanischen und physikalischen Folieneigenschaften werden wesentlich verbessert, sehr gute Dickentoleranzen werden erreicht und die perfekte Blasenstabilität, die exakte Einhaltung der Folienbreite sowie die absolute Faltenfreiheit der flachgelegten Folie sind immer gewährleistet. Ferner soll gemäß der vorliegenden Erfindung eine extrem bedienungsfreundliche Vorrichtung bereit gestellt werden, die besonders flexibel ist und einen sehr breiten Anwendungsbereich aufweist sowie das Anfahren der Anlage oder eine Produktionsumstellung in nur wenigen Minuten möglich macht.

Diese Aufgabe wird erfindungsgemäß durch ein Verfahren gemäß des vorgeschlagenen Anspruchs 1 gelöst sowie durch eine Vorrichtung zur Durchführung des Verfahrens gemäß des vorgeschlagenen Anspruchs 6.

Besondere Weiterbildungen der Erfindung sind in den Unteransprüchen gekennzeichnet.

Dabei wird erreicht,
daß der Hals im Übergangsbereich an zwei Stellen an der konischen Kontaktfläche und am Punktkontakt der unteren Düsenlippe geführt ist und daß die Innenkühlung unmittelbar nach dem zweiten Punktkontakt im ausweitenden Bereich der Folienblase wirksam wird,
daß der Hals und der Übergangsbereich an drei Stellen, an der konischen Kontaktfläche, dem Punktkontakt und an der Kontaktfläche der Führungsringe geführt ist, und daß die Innenkühlung unmittelbar nach dem zweiten Punktkontakt im ausweitenden Bereich der Folienblase wirksam wird,
daß die Innenkühlungsluft zwischen koaxialen Röhren durch den Schleppdorn zu den geformten Innenlippen geführt wird, und daß die heiße Luft der Innenkühlung zentral durch den Schlepp. dorn über die Rohre abgesaugt wird.

Weiterhin ist eine Vorrichtung zur Durchführung des Verfahrens der eingangs genannten Gattung dadurch gekennzeichnet,
daß die Vorrichtung ein, auf ein Werkzeug aufgesetztes Rohr, mit einem hierin angeordneten, in das Werkzeug eingeführten und mit einem Saugrohr in Verbindung stehenden Innenrohr, einem um das Außenrohr angeordneten konischen Schleppdorn und ein mit Düsenlippen versehenes Endsaugrohr aufweist, daß am Endbereich des in den Basisverteiler einführenden Rohres eine,das Rohr aufnehmende Zentrierung angeordnet ist, wobei im Basisverteiler mindestens ein Kühlkanal gebildet ist, der in den Kühlkanal führt, der durch das Rohr und das auf den Basisverteiler aufgesetzte Rohr gebildet ist,
daß die das Rohr aufnehmende Innendüsenlippe mindestens einen Kühlkanal aufweisen,
daß sich die Außendurchmesser der Innendüsenlippe kongruent mit dem Außendurchmesser des konischen Schleppdorns verhalten,bzw. daß die Innendüsenlippe eine über den Schleppdorn überragende und einen Punktkontakt bildende Lippe aufweisen,
daß zwischen Werkzeug und Basisverteiler zum Druckausgleich fungierende Kanäle gebildet sind,
daß zwischen Schleppdorn und Rohr ein den Druckausgleich gewährleistender Spalt gebildet ist, der mit im Rohr angeordneten Belüftungsbohrungen in Verbindung steht, sowie für den Druckausgleich fungierende, im Bereich der Zentrierung zwischen Schleppdorn und Rohr angeordneten Nuten,
daß zwischen der Düsenlippe und Endsaugrohr eine Dehnungsausgleichsvorrichtung in Form einer Tellerfeder angeordnet ist,
daß die Vorrichtung mit einem Bajonettverschluß auf dem Spaltring befestigt ist und somit eine schnell Demontage der Vorrichtung gewährleistet,
daß der Schleppdorn mit einem isolierenden Stoff, vorzugsweise aus Baumwolle überzogen ist,

daß der Schleppdorn mit einer isolierenden Keramikbeschichtung überzogen ist,

daß die konische Oberfläche des Schleppdorns zur Kontaktflächenreduzierung ein Grobgewinde bzw. ein wellenförmiges Profil aufweist,

daß auf dem Rohr mindestens ein, eine Kontaktfläche bildender Führungsring angeordnet ist,

daß der Führungsring zur Kontakt-Oberflächenreduzierung ein Grobgewinde aufweist, und

daß der Schleppdorn zur Höhenverstellung eine Befestigungsschraube aufweist.

Anhand den beigefügten Zeichnungen, die ein besonders bevorzugtes Ausführungsbeispiel der Erfindung zeigen, wird diese nun näher erläutert. Dabei zeigen:

Figur 1    eine komplette Vorrichtung der erfindungsgemäßen Art;

Figur 2    ein Ausführungsbeispiel der Erfindung mit einem konischen Schleppdorn und kleinen Innendüsenlippen;

Figur 3    ein Ausführungsbeispiel der Erfindung mit konischem Schleppdorn mit großen Innendüsenlippen;

Figur 4    ein in Figur 2 mit A gekennzeichnetes Detail;

Figur 5    ein in Figur 3 mit B gekennzeichnetes Detail;

Figur 6-8    die Einzelheiten, mit denen ein Druckausgleich zwischen dem Hals und dem Außenrohr sowie zwischen dem Schleppdorn und der unteren Düsenlippe gewährleistet wird;

Figur 9    eine weitere Variante der Vorrichtung mit Führungsring;

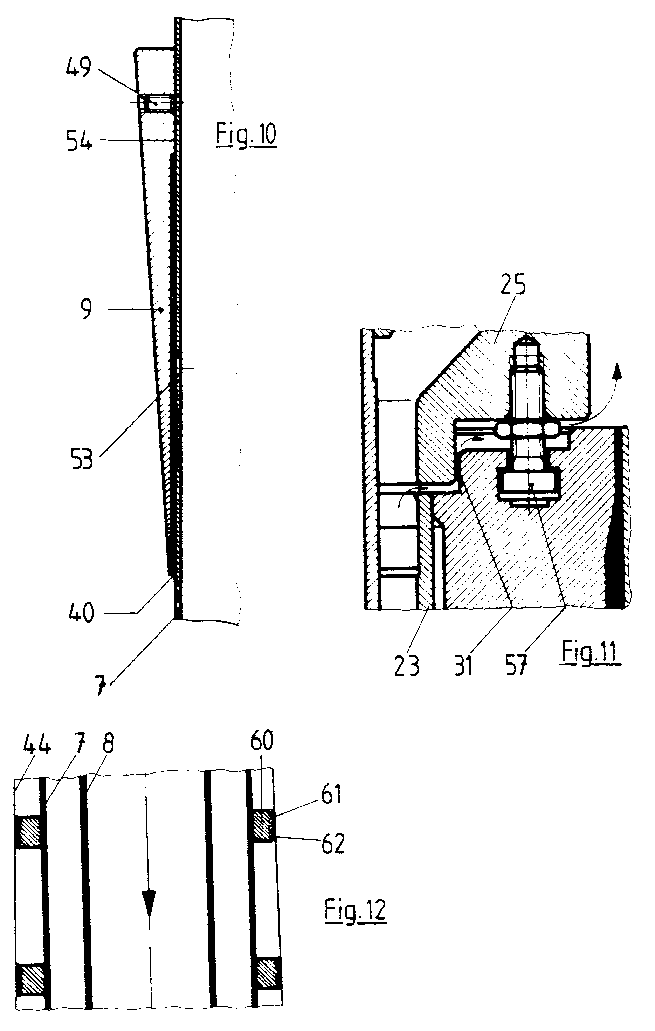

Figur 10    eine Vergrößerung des in Figur 4 und 5 mit C gekennzeichneten Details;

Figur 11    eine Vergrößerung des in Figur 9 mit D gekennzeichneten Details;

Figur 12    eine Vergrößerung des in Figur 9 mit E gekennzeichneten Details.

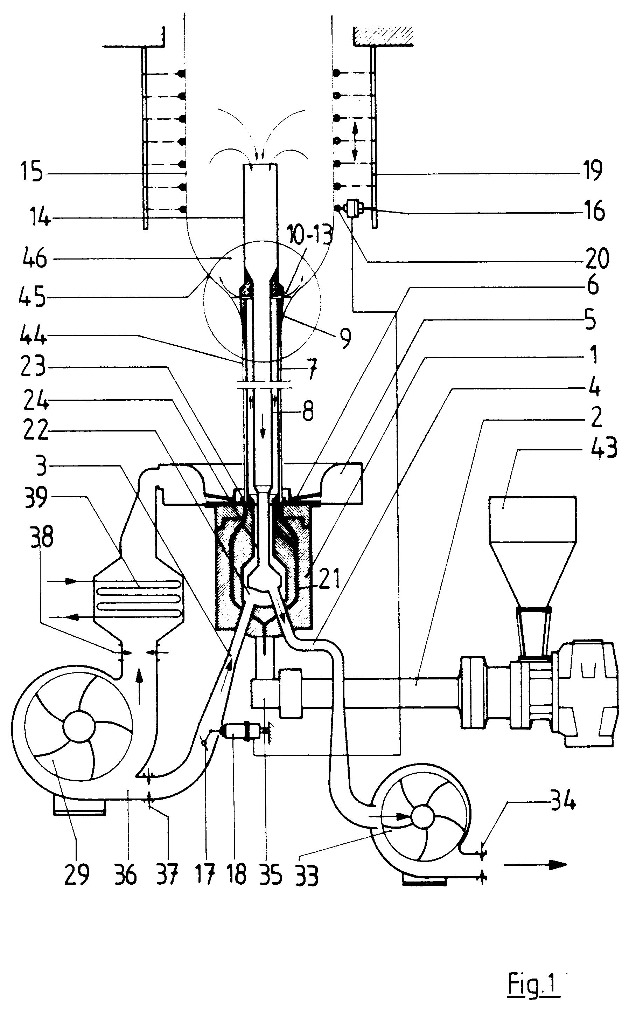

In Figur 1 ist eine komplette Extrusionsanlage mit der erfindungsgemäßen Vorrichtung abgebildet.

Das Polyäthylen-Granulat wird in den Trichter 43 gegeben und durch den Extruder 2 plastifiziert, mit hohem Druck durch den Siebwechsler 35 und dem Werkzeug 1 zu einem Hals 44 geformt, der sich nach einer Länge von etwa 4- bis 10-fachen des Düsendurchmessers über den Übergangsbereich 45 zum Folienschlauch 15 ausweitet.

Unmittelbar über dem Werkzeug 1 befindet sich der Hochleistungskühlring 5 mit Venturi-Einsätzen 6, der eine optimale Außenkühlung des Halses 44, des Übergangsbereiches 45 und des Folienschlauchs 15 gewährleistet. Das Werkzeug 1 ist für das Innenkühlungssystem vorbereitet. Die Kaltluftzufuhr wird durch die Rohre 3 zu dem Verteilerstück 22, anschließend zwischen den koaxialen Rohren 24 und 23 zum Innenkühlungsbereich 46 geleitet. Die heiße Abluft wird über die zentrale Rohrleitung 24 aus dem Verteilerstück 22 und den Rohren 4 abgesaugt.

Das Kaltluftgebläse 29 fördert die Kühlluft durch den Verteiler 36 sowohl zum Kühlring 5 als auch zu dem Innenkühlbereich 46. Die Einstellung der Luftmengen erfolgt über die von Hand regelbaren Irisblenden 37 und 38.

Mit dem Wärmetauscher 39, der unmittelbar nach dem Gebläse 29 angebaut wird, ist eine zusätzliche Klimatisierung der Kühlluft möglich. Das Heißluftabsaugungsgebläse 33 saugt die Warmluft aus dem Folienschlauch 15 über die Rohre 14, 24 und 4. Die Einstellung der Abluftmenge erfolgt über die von Hand regelbare Irisblende 34.

Ein in der Höhe einstellbarer Kalibrierkorb 19 gewährleistet die Führung und Kalibrierung des Folienschlauches 15. Der Tastarm 20 überträgt durch die Berührung des Folienschlauchs 15 die Durchmesseränderungen der Blase an dem pneumatischen Fühler 16. Die Regelung des Durchmessers des Folienschlauchs 15 erfolgt durch die Regelklappe 17, die mit dem Luftzylinder 18 durch den Fühler 16 gesteuert wird. Bei einem zu großen Blasendurchmesser drosselt die Regelklappe 17 automatisch die Innenluftzufuhr und bei einem zu kleinen Durchmesser öffnet sich die Regelklappe 17. Die Genauigkeit dieses pneumatischen Regelsystems liegt bei 0,1 %. Deshalb können die Liegebreiten des flachgelegten Folienschlauches sehr exakt gehalten werden, z. B. werden bei 1000 mm Breite maximal plus/minus 1 mm Schwankungen festgestellt.

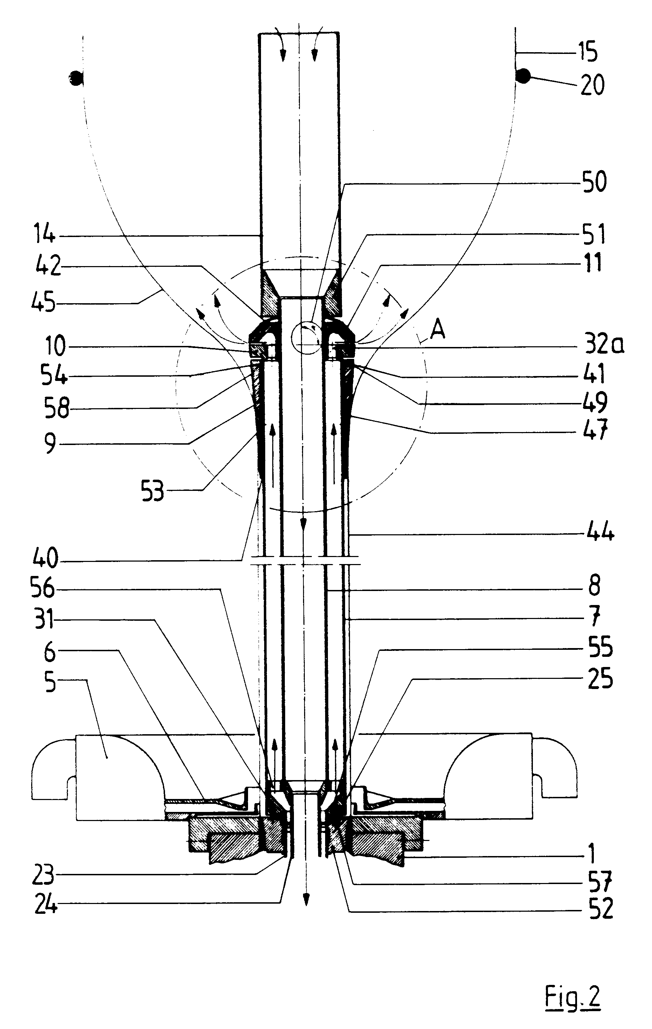

Gemäß Figur 2 ist ein Ausführungsbeispiel der Erfindung dargestellt, wobei neben dem konischen Schleppdorn 9 Innendüsenlippen 10 und 11 eingesetzt sind, deren Außendurchmesser kongruent zum Außendurchmesser des Innenschleppdorns 9 ausgebildet sind.

Der Kontakt zwischen dem Hals 44 und dem Schleppdorn 9 erfolgt über der konischen Fläche 47, die je nach Folienproduktion in der Höhe bis zum 0,20-fachen des Düsendurchmessers betragen kann.

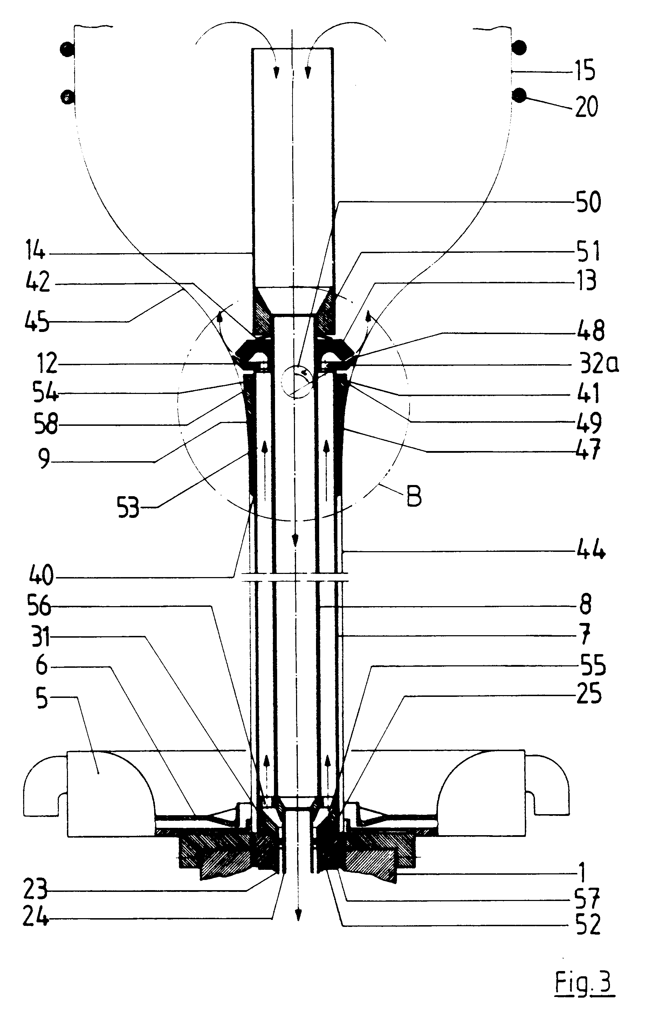

Figur 3 zeigt eine Ausführungsform der Erfindung mit konischem Schleppdorn 9, jedoch mit wesentlich größeren Innendüsenlippen 12 und 13.

Der Kontakt zwischen dem Hals 44 und den Innenteilen erfolgt hierbei an zwei Stellen:

1. an der konischen Kontaktfläche 47 und

2. mit dem Punktkontakt 48 der Innendüsenlippe 12.

Die Vorteile dieser Variante sind, eine bessere Blasenstabilität aufgrund des doppelten Kontaktes zwischen dem Hals 44 und dem Übergangsbereich 45 mit dem Innenschleppdorn 9 und Lippe 12 , sowie eine bessere Wirkung der Innenkühlung aufgrund des kleinen Abstandes zwischen der Innenlippen 12 und 13 zu dem Übergangsbereich 45 des Folienschlauchs.

Der Folienhals 44, geformt aus dem Werkzeug 1 mit einer Höhe vom 4- bis 10-fachen des Düsendurchmessers, wird zum Folienschlauc 15 über den Übergangsbereich 45 aufgeblasen.

Die Außenkühlung erfolgt durch den Hochleistungskühlring 5 mit Venturi-Einsätzen 6, unmittelbar nach dem Austritt der Schmelze aus dem Werkzeug 1 auf der ganzen Halshöhe 44, auf den Übergangsbereich 45 und teilweise auch noch auf dem Schlauch 15.

Die Innenkühlung wird im Werkzeug 1 zwischen den Rohren 24 und 23 und zwischen den Rohren 7 und 8 durch den konischen Schleppdorn 9 zu den Innendüsenlippen 10 und 11 bzw. 12 und 13 zugeführt.

Die heiße Luft wird zentral über die Rohre 14, 8 und 24 durch das Werkzeug 1 abgesaugt. Gemäß den Figuren 2 und 3 sitzt der konische Schleppdorn 9 auf dem Rohr 7 zentral im Hals 44, unmittelbar vor dem Übergangsbereich 45, in dem sich der Hals 44 zum Folienschlauch 15 ausweitet.

Die hohe Luftaustrittsgeschwindigkeit aus den Düsenlippen 10 und 11 bzw. 12 und 13 gewährleistet aufgrund der hohen turbulenten Strömung eine sehr gute Wärmeübergangzahl an der Innenseite des Übergangsbereiches 45 und garantiert deshalb für eine sehr wirksam Innenkühlung. In der Ausführung gemäß der Figur 3 mit einem direkten Kontakt zwischen dem Übergangsbereich 45 und der unteren Düsenlippe 12 wird eine noch bessere Kühlung erreicht, aufgrund des noch kürzeren Abstandes zwischen den Düsenlippen 12 und 13 und dem Übergangsbereich 45 der Folienblase. Die Reynolds-Zahl der Luftströmung in diesem Bereich ist dadurch noch größer und somit auch der Wärmeübergang. Für beide Ausführungen gemäß den Figuren 2 und 3 benötigt die Innenkühlung weniger Kühlluft als bei einem konventionellen Innenkühlungssystems, um den gleichen Innenkühleffekt zu erreichen. D.h., daß bei gleichem Innenluftdurchsatz die erfindungsgemäße Vorrichtung gemäß Figur 2 und 3 wirkungsvoller ist als die bekannten Systeme.

Gemäß den Figuren 2 und 3 ist der Schleppdorn 9 in der Höhe einstellbar. Die Befestigung des Schleppdorns 9 erfolgt über die Befestigungsschraube 49. Diese Höhenverstellung ist besonders wichtig, um unterschiedliche Halslängen einstellen zu können.

In der Ausführungsform gemäß Figur 3 kann die Einstellung der Halsröhre nur durch den Austausch der Rohre 8 und 7 erfolgen. Eine kleine Verstellung in der Höhe des Schleppdorns 9 ermöglicht die Anpassung des Abstandes zwischen dem konischen Flächenkontakt 47 und dem Punktkontakt 48, je nach Produktionsprogramm. Der mit dem Bezugszeichen 50 gekennzeichnete Winkel Alpha der Innendüsenlippen 10 und 13 sollte zwischen 90° und 45° gegenüber der vertikalen Achse gewählt werden.

Ein weiteres Merkmal der Erfindung ist die Führung des Halses 44 durch den konischen Flächenkontakt 47 mit dem Schleppdorn 9. Dadurch erfolgt die Stabilisierung des Halses 44 und des Folienschlauchs 15. Der Hals 44 sowie der Übergangsbereich 45 können sich nicht mehr horizontal und auch nicht mehr vertikal auf- und abwärts bewegen. Eine noch bessere Führung des Halses 44 und des Übergangsbereiches 45 wird mit der Ausführung gemäß Figur 3 erreicht, in der ein doppelter Kontakt mit den Innenteilen vorhanden ist. Die Führung des Halses 44 durch den konischen Flächenkontakt 47 mit dem Schleppdorn 9 wird mit dem Punktkontakt 48 mit der unteren Düsenlippe 12 weiter unterstützt. Dadurch resultiert die perfekte Breitenhaltung des flachgelegten Folienschlauches sowie die absolute Faltenfreiheit der Folienbahn.

Die konische Gestaltung des Schleppdorns 9 gewährleistet einen sehr universellen Einsatz. Alle HDPE-, LDPE- und LLDPE-Mischungen können in einem sehr breiten Verarbeitungsbereich als Monofolie extrudiert bzw. als zwei- oder dreischichtige Folie koextrudiert werden. Je nach der Geometrie der Innenteile 9, 10 und 11, bzw. 9, 12 und 13 wird ein sehr großer Liegebreitenbereich abgedeckt, mit Aufblasverhältnissen, die zwischen 1:1,75 bis 1:6 liegen können und der Folienstärkenbereich kann je nach Polymertyp zwischen 5 bis 75 $\mu$ eingestellt werden.

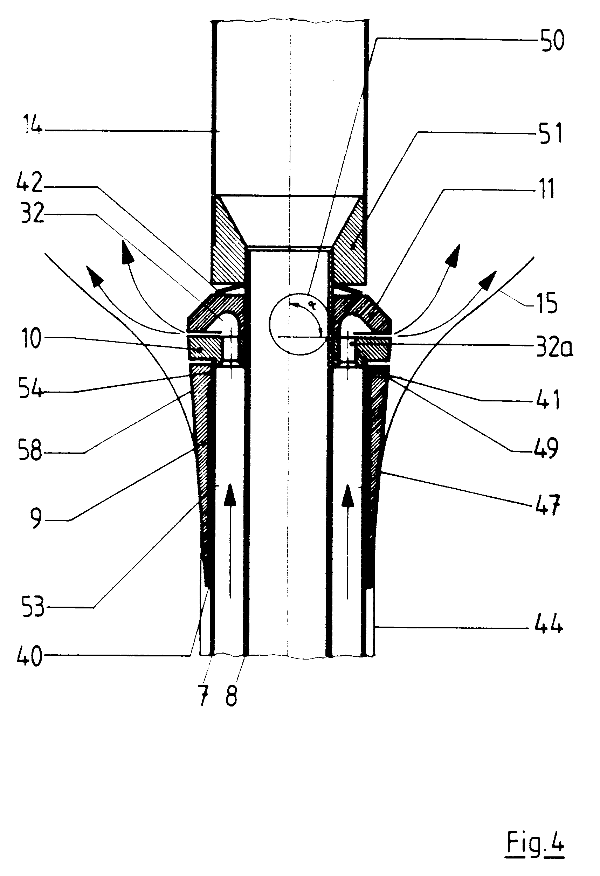

Figur 4 zeigt eine Vergrößerung des in Figur 2 mit A gekennzeichneten Details.

Hierbei wird ersichtlich, daß die Innendüsenlippen 10 und 11 mindestens einen Kühlkanal 32 aufweisen, der zur Innenkühlung des Folienschlauchs 15 dient.

Es ist hierbei deutlich zu erkennen, daß der Folienschlauch 15 lediglich Kontakt an der konischen Fläche 27 des Schleppdorns 9 aufweist, da die Außendurchmesser der Innendüsenlippen 10 und 11 in etwa dem Außendurchmesser des konischen Schleppdorns 9 entsprechen.

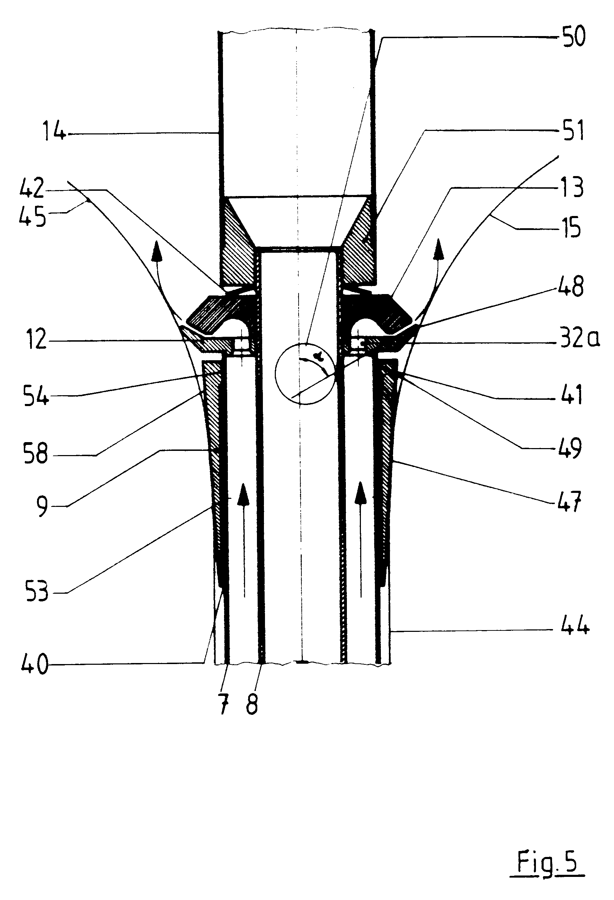

Figur 5 zeigt eine Vergrößerung des in Figur 3 mit B gekennzeichneten Details.

Hierbei sind Innendüsenlippen 12 und 13 verwendet, die über den Außenumfang des konischen Schleppdorns 9 überragen. Dies hat zur Folge, daß neben dem konischen Flächenkontakt 47 ein Punktkontakt 48 hergestellt wird.

Die Vorteile dieser Ausführungsform sind bereits zurvor beschrieben.

Wie in Figur 4 und 5 erkennbar, ist zwischen Endrohr 14 bzw. der die Vorrichtung verbindenden mutter 51 und Innendüsenlippe 11 bzw. 13 eine Dehnungsausgleichsvorrichtung in Form einer Tellerfeder 42 angeordnet.

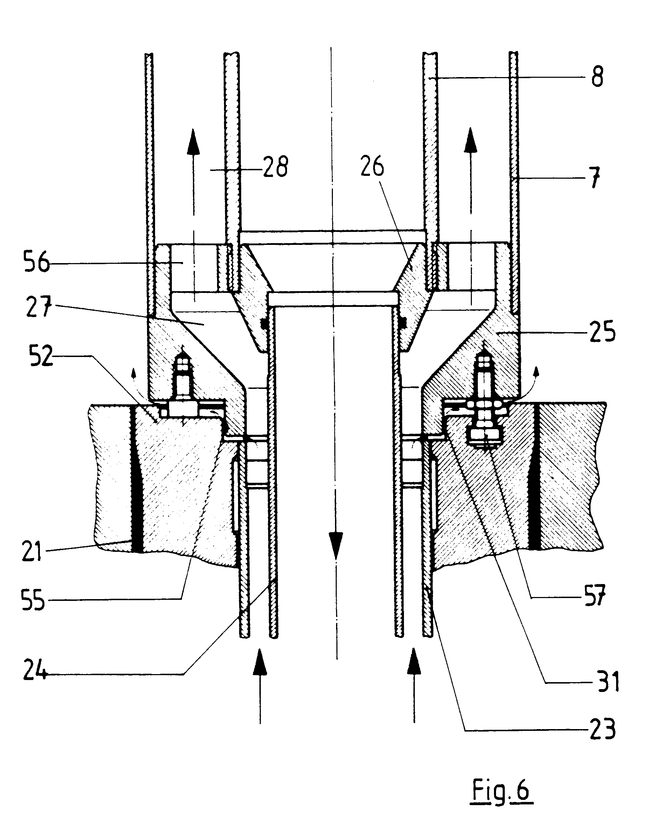

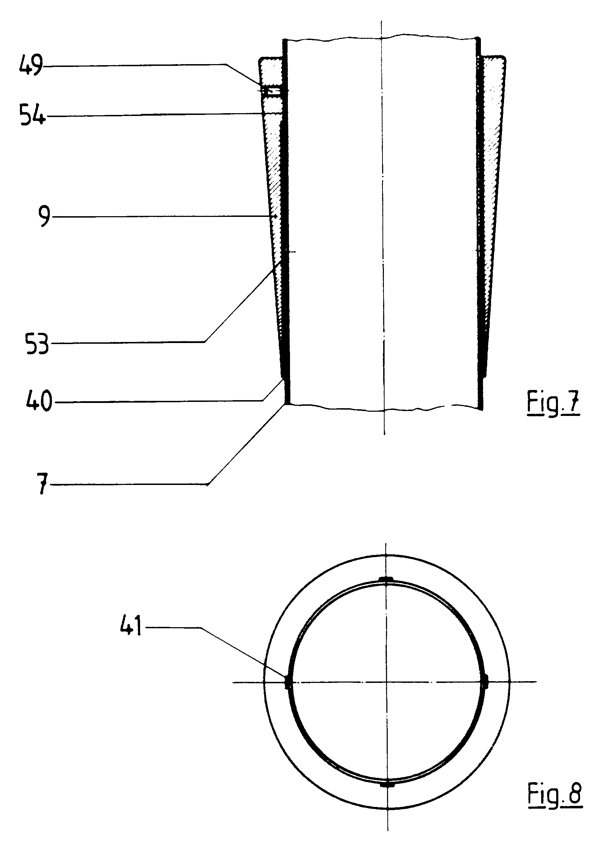

Die Figuren 6 bis 8 zeigen die Einzelheiten, mit denen ein Druckausgleich zwischen dem Hals 44 und dem Außenrohr 7 sowie zwischem dem Schleppdorn 9 und der unteren Düsenlippe 12 gewährleistet werden kann. Der Druckausgleich erfolgt durch die Kanäle 31 von ca. 1 mm zwischen dem Basisverteiler 25 und dem Spaltring 52 sowie durch den 1 mm Spalt 40 zwischen dem Außenrohr 7 und dem Schleppdorn 9. Die Belüftungsbohrungen 53 bringen einen zusätzlichen Druckausgleich in das System über den Spalt 40. Gemäß der Figuren 7 und 8 ist der Spalt 40 nur zu 85 % der gesamten Schleppdornhöhe vorgesehen. Im oberen Bereich des Schleppdorns 9 ist eine Zentrierung 54 angeordnet. Für den Durckausgleich in der Vorrichtung sind mehrer Nuten 41 in die Zentrierung 54 eingearbeitet. Die Zentrierung der Teile 25 und 52 erfolgt gemäß der Abbildung in Figur 6 durch drei Stützpunkte 55, die in einem Abstand von 120° auf dem Basisverteiler 25 angebracht sind.

Mit dieser besonderen Ausführung ist die Gewährleistung gegeben, daß der Hals 44 immer sehr stabil bleibt. Ansaugeeffekte bzw. Aufblähungen des Halses 44, je nach Produktionsprogramm sind somit nicht möglich. Weitere Vorteile bringen diese Belüftungsspalte 31 und 40, die Bohrungen 53 und die Belüftungsnuten 41 während der Anfahrphase der Extrusionsanlage. Die ausströmende Luft aus den Spalten 31 und 40 weitet während der Anfahrphasen den plastischen Schlauch 44 aus und erleichtert somit seinen Überzug über den Schleppdorn 9 und die Düsenlippe 10 oder 12.

Die Luftführungsrohre 8 und 7 sind exakt zentriert durch den Basisverteiler 25 und die unteren Düsenlippen 10 oder 12. Die Kühlluft strömt durch die Bohrungen 56 und 32 a. Die komplette Vorrichtung ist mit der Mutter 51 zusammengeschraubt. Die Tellefeder 42 gleicht die Dehnungsunterschiede aus, die aufgrund von unterschiedlichen Temperaturen in den Rohren 8 und 7 auftreten.

Die komplette Vorrichtung ist auf dem Spaltring 52 des Werkzeuges 1 mit einem Bajonettverschluß 57 befestigt. Die schnelle Demontage der Vorrichtung, die bei jeder Spaltring-Reinigung notwendig ist, ist somit gewährleistet.

Für die Verhinderung der Haftung im Bereich der konischen Kontaktfläche 47 zwischen der plastischen Schmelze und dem Schleppdorn 9 sind mehrere Maßnahmen notwendig: Überzug des Schleppdornes 9 durch einen isolierenden Stoff aus Baumwolle, als alternative Lösung kann eine isolierende Keramikbeschichtung auf der Oberfläche des Schleppdorns 9 aufgespritzt werden, oder eine Reduzierung der Kontaktoberfläche des Schleppdornes 9 durch ein Grobgewinde bzw. durch ein wellenförmiges Profil, das auf der konischen Oberfläche eingearbeitet wird.

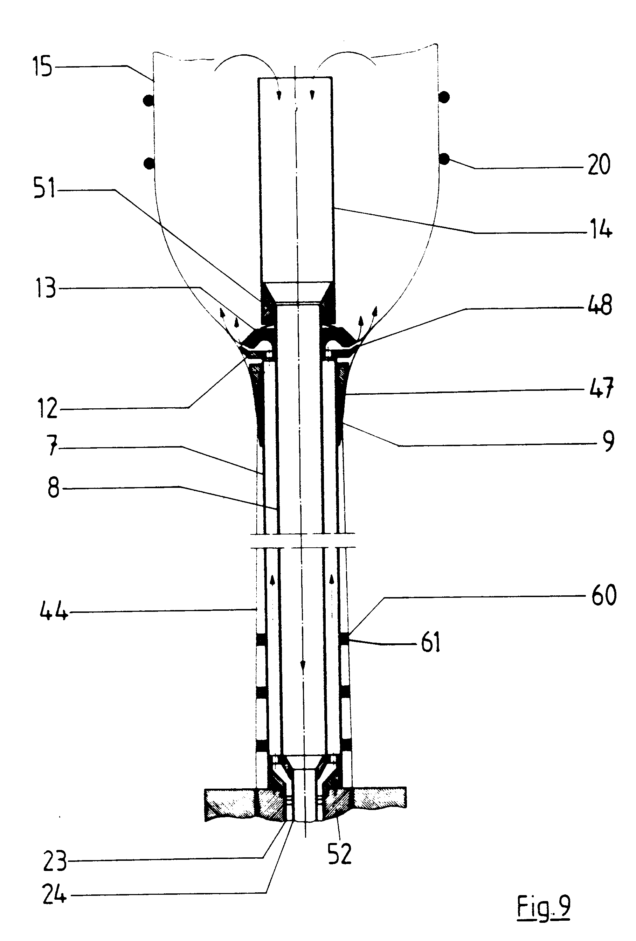

Eine Variante der Führung des Halses 44 und der Gestaltung des Rohres 7 ist in Figur 9 dargestellt. Eine Reihe von Führungsringen 60, mit unterschiedlichen Durchmessern, die auf dem Rohr 7 befestigt sind, gewährleisten eine noch bessere Führung des Halses 44 und bilden neben dem Punktkontakt 48 und der konischen Kontaktfläche 47 eine dritte Kontaktfläche 61. Diese besondere Ausführung hat sich speziell bei der Herstellung von schmalen Schläuchen mit kleinen Düsendurchmessern und mit reduzierten Aufblasverhältnissen bewährt. Bei solchen Produktionen, z.B. bei der Herstellung von einem 500 mm breiten Schlauch mit etwa 12 bis 18μ Stärke aus HDPE, wird aufgrund der physikalischen Polymer-Eigenschaften und durch die Fahrweise mit langem Hals, eine erhebliche Einschnürung des Halses 44 festgestellt. Der Durchmesser des Halses 44 kann sich somit kurz vor der Aufweitung der Blase bis auf 50 % des Düsendurchmessers reduzieren. Um die durch die Physik vorgegebene Ausbildung des Halses 44 nicht zu stark zu beeinflussen, wird die Geometrie der Vorrichtung gemäß Figur 9 wie folgt ausgeführt: Der Durchmesser des Rohres 7 wird stark reduziert.
Der Durchmesser der Ringe 60 wird abnehmend gewählt, der untere Ring ist gleich groß wie die Düse und der Durchmesser des oberen Ringes kann sich bis auf 0,8 mal des Düsendurchmessers reduzieren.

Die Anzahl der Ringe variiert je nach Düsengröße und Halslänge, jedoch mindestens ein Ring. Der minimale Schleppdorndurchmesser wird ebenfalls stark reduziert.

Die Ringe 60 sind zum Zwecke der Oberflächenreduzierung mit einem auf dem Außendurchmesser eingearbeiteten Grobgewinde 62 versehen.

Durch die erfindungsgemäße Vorrichtung werden die Vorteile erzielt, die insbesondere in einer Leistungssteigerung der Anlage, einer Qualitätsverbesserung der Folie und der verfahrenstechnischen Verbesserung bei der Einstellung und Umstellung der Folienblasenanlage wirksam wird.

Es wird eine erhebliche Leistungssteigerung bei der Herstellung von bi-axial orientierten Folien aus HDPE, LDPE und LLDPE-Mischungen in der Fahrweise mit extrem langem Hals vom 4- bis 10-fachen des Düsendurchmessers und mit sehr hohen Düsenleistungen von bis zu 4,5 kg/cm/hr . (25 lbs/inch/hr) erzielt.

Ein weiterer Vorteil der erfindungsgemäßen Vorrichtung besteht darin, daß eine erhebliche Qualitätsverbesserung bei der Herstellung von bi-axial orientierten Folien aus HDPE-,LDPE-oder LLDPE-Mischungen mit besonders guten physikalischen und mechanischen Eigenshaften erreicht wird. Diese Verbesserungen der Folieneigenschaften sind auf optimale Längs-und Querstreckungen der Polymer-Molekülketten zurückzuführen. Durch die zusätzliche Reibung auf dem Schleppdorn wird eine höhere Längsverstreckung der Folien erreicht. Durch die intensive Innenkühlung der Folie im Übergangsbereich wird ein erheblich höherer Innendruck in der Blase benötigt, um die Querstreckung der Folie durchzuführen. Beide Effekte führen zu einer wesentlichen Verkürzung des Übergangsbereiches zwischen dem Beginn der Aufweitung und der Frostlinie, ferner erfolgt fortschrittlicherweise eine wesentlich schnellere Verstreckung in Längs- und Querrichtung. Deshalb wird die optimale Bi-Orientierung der Forlie erreicht und es werden ausgeglichenere Folienfestigkeiten sowohl in Längs- als auch in Querrrichtung erreicht, sehr hohe Dart-Test-Werte und optimale Weiterreißfestigkeiten der Folie in beiden Richtungen. Dies gilt insbesondere für sehr große Liegebreiten, die mit größeren Düsen hergestellt werden, bei denen der Übergangsbereich immer länger wird.

Desweiteren ist die Herstellung von bi-axial orientierten Folien aus LDPE und LLDPE mit besonders guten optischen Eigenschaften und hohen Ausziefähigkeiten der Polymere durch die erfindungsgemäße Vorrichtung möglich.

Weiterhin ermöglicht die vorliegende Erfindung die Herstellung von bi-axial orientierten Folien mit guten Dickenverteilungen. Aufgrund der Stabilisierung der Blase durch den Schleppdorn und der besonderen Gestaltung der Innenkühlungslippen gibt es keine Stärkungsunterschiede in der Folie durch unterschiedliche Innenkühleffekte. Bei konventionellen Innenkühlsystemen haben horizontale Wanderungen des Halses negative Einflüsse auf die Dickenverteilungen.

Aufgrund des Flächenkontaktes zwischen dem Folienschlauch und dem Schleppdorn gemäß der Figur 2 bzw. aufgrund des doppelten Kontaktes zwischen dem Hals, dem Übergangsbereich und der Innenteile gemäß der Figur 3, wird eine wesentlich bessere Blasenstabilität erreicht. Daraus resultiert die exakte Breitenhaltung des flachgelegten Folienschlauches und somit die perfekte Faltenfreiheit der Folie. Die Produktion von exakten Wickeln, besonders in Bezug auf die Geometrie der Rolle und Planlage der Folie, ist somit immer gewährleistet.

Ein weiteres Kennzeichen der Erfindung ist die sehr wirksame Innenkühlung im Folienschlauch aufgrund des kleinen Abstandes zwischen den Innendüsenlippen zum Übergangsbereich des Folienschlauches. Im Vergleich zu einer konventionellen Innenkühlung ist der Wirkungsgrad der neuen Vorrichtung wesentlich besser.

Ein wichtiger Vorteil der erfindungsgemäßen Vorrichtung besteht auch in dem sehr breiten Verarbeitungsbereich, des mit dieser Vorrichtung durchführbaren Verfahrens. Bei maximaler Extruderleistung und mit der gleichen Vorrichtung können folgende Umstellungen problemlos und extrem schnell, oft in Zeiten die unter 1 Minute liegen, vorgenommen werden: Die Änderung der Liegebreite im Bereich der Aufblasverhältnisse 1:1,75 bis 1:6,0.
Die Änderungen der Folienstärken im Bereich von 5 bis 75 $\mu$. Die Änderungen der Abzugsgeschwindigkeiten im Bereich von 15 bis 200 m/min.

Der letzte wichtige Vorteil der erfindungsgemäßen Vorrichtung besteht in dem einfachen Einstellen bzw. Umstellen der Anlage, wobei kein qualifiziertes Personal benötigt wird.

Bezugszeichenliste

| 1 | Werkzeug |
|---|---|
| 2 | Extruder |
| 3 | Gebläserohr |
| 4 | Absaugrohr |
| 5 | Hochleistungs-Kühlring |
| 6 | Venturi-Einsatz |
| 7 | Rohr |
| 8 | Innenrohr |
| 9 | Konischer Schleppdorn |
| 10 | Innendüsenlippe |
| 11 | Innendüsenlippe |
| 12 | Innendüsenlippe |
| 13 | Innendüsenlippe |
| 14 | Endsaugrohr |
| 15 | Folienschlauch |
| 16 | Pneum. Fühler |
| 17 | Regelklappe |
| 18 | Luftzylinder |
| 19 | Kalibrierkorb |
| 20 | Tastarm |
| 21 | Innenkanal |
| 22 | Verteilerbereich |
| 23 | Koaxiales Rohr |
| 24 | Koaxiales Rohr |
| 25 | Basisverteiler |
| 26 | Zentrierung |
| 27 | Kühlkanal |
| 28 | Kühlkanal |
| 29 | Kaltluftgebläse |
| 30 | Kühlkanal |
| 31 | Kühlkanal |
| 32 | Kühlkanal |
| 32a | Bohrung |
| 33 | Heißluftansaugungsgebläse |
| 34 | Iris-Blende |
| 35 | Siebwechsler |
| 36 | Verteiler |

| 37 | Iris-Blende |
| 38 | Iris-Blende |
| 39 | Wärmetauscher |
| 40 | Spalt |
| 41 | Nuten |
| 42 | Tellerfeder |
| 43 | Trichter |
| 44 | Hals |
| 45 | Übergangsbereich |
| 46 | Innenkühlbereich |
| 47 | Konische Fläsche (Flächen-Kontakt) |
| 48 | Punktkontakt |
| 49 | Befestigungsschraube |
| 50 | Winkel Alpha |
| 51 | Mutter |
| 52 | Spaltring |
| 53 | Belüftungsbohrung |
| 54 | Zentrierung |
| 55 | Stützpunkt |
| 56 | Bohrung |
| 57 | Bajonettverschluß |
| 58 | Grobgewinde |
| 59 | -- |
| 60 | Führungsring |
| 61 | Punktkontakt |
| 62 | Grobgewinde |

## Patentansprüche

1. Hochleistungskühlverfahren für die Herstellung von bi-orientierten Folien aus hoch- und mittelmolekularen Thermoplasten mit der sogenannten Fahrweise mit langem Hals, auf einer Folienblasanlage, bestehend aus einem Extruder-(2), mit Blaskopf, geeignet für die Plastifizierung und Formgebung des Kunststoffs, mit einer Außenkühlung der Folienblase mittels eines Hochleistungskühlringes (5), mit einem Innenkühlsystem sowie einem Kalibrierkorb (19) für die Führung der Folienblase und die Steuerung der Liegebreite der Folie, **dadurch gekennzeichnet,** daß der Folienhals (44) kurz vor seiner Ausweitung (45) durch einen unmittelbar vor der Folienblase positionierten, in der Höhe einstellbaren konischen Schleppdorn (9) stabilisiert und geführt wird und daß die hochintensive Innenkühlung unmittelbar nach dem Schleppdorn (9) im Bereich der Ausweitung (45) der Folienblase wirksam wird.

2. Hochleistungskühlverfahren nach Anspruch 1, dadurch gekennzeichnet, daß der Hals (44) im Übergangsbereich (45) an zwei Stellen, an der konischen Kontaktfläche (47) und am Punktkontakt (48) einer unteren Düsenlippe (12) geführt ist und daß die Innenkühlung unmittelbar nach dem zweiten Punktkontakt (48) im ausweitenden Bereich der Folienblase wirksam wird.

3. Hochleistungskühlverfahren nach Anspruch 1-2, dadurch gekennzeichnet, daß der Hals (44) und der Übergangsbereich (45) an drei Stellen, an der konischen Kontaktfläche (47), am Punktkontakt (48) und an der Kontaktfläche der Führungsringe (60) geführt ist, und daß die Innenkühlung unmittelbar nach dem zweiten Punktkontakt im ausweitenden Bereich der Folienblase wirksam wird.

4. Hochleistungskühlverfahren nach Anspruch 1-3, dadurch gekennzeichnet, daß die Innenkühlungsluft zwischen koaxialen Röhren durch den Schleppdorn (9) zu den geformten Innenlippen geführt wird.

5. Hochleistungskühlverfahren nach Anspruch 1-4, dadurch gekennzeichnet, daß die heiße Luft der Innenkühlung zentral durch den Schleppdorn (9) über die Rohre (14) und (8) abgesaugt wird.

6. Vorrichtung zur Durchführung des Verfahren nach den Ansprüchen 1-5, wobei die Folienblasanlage aus einem Extruder (2) mit Blaskopf, geeignet für die Plastifizierung und Formgebung des Kunststoffes, einer Außenkühlung der Folienblase mittels eines Hochleistungskühlringes (5), einem Innenkühlsystem sowie einem Kalibrierkorb (19) für die Führung der Folienblase und die Steuerung der Liegebreite der Folie besteht, wobei ein auf ein Werkzeug (1) aufgesetztes Rohr (7) mit einem darin angeordneten, in das Werkzeug (1) eingeführten und mit einem Saugrohr (4) in Verbindung stehenden Innenrohr (8) vorgesehen ist, **dadurch gekennzeichnet,** daß um das Außenrohr (7) unmittelbar im Bereich vor der Ausweitung (45) der Folienblase ein konischer Schleppdorn (9) angeordnet ist und daß unmittelbar nach dem Schleppdorn (9) im Bereich der Ausweitung (45) der Folienblase ein mit Düsenlippen (10, 11; 12, 13) versehenes Endsaugrohr (14) vorgesehen ist, wodurch eine Innenkühlung unmittelbar nach dem Schleppdorn (9) aktivierbar ist.

7. Vorrichtung nach Anspruch 6, dadurch gekennzeichnet, daß am Endbereich, des in den Basisverteiler (25) einführenden Rohres (24) eine, das Rohr (8) aufnehmende Zentrierung (26) angeordnet ist, wobei im Basisverteiler (25) mindestens ein Kühlkanal (27) gebildet ist, der in den Kühlkanal (28) führt, der durch das Rohr (8) und das auf den Basisverteiler (25) aufgesetzte Rohr (7) gebildet ist.

8. Vorrichtung nach den Ansprüchen 6-7, dadurch gekennzeichnet, daß die das Rohr (8) aufnehmenden Innendüsenlippen (10, 11 oder 12, 13) mindestens einen Kühlkanal (32) aufweist.

9. Vorrichtung nach den Ansprüchen 6-8, dadurch gekennzeichnet, daß sich die Außendurchmesser der Innendüsenlippen (10-11) kongruent mit dem Außendurchmesser der konischen Schleppdorns (9) verhalten.

10. Vorrichtung nach den Ansprüchen 6-9, dadurch gekennzeichnet, daß die Innendüsenlippe (12) eine über den Schleppdorn (9) überragende und einen Punktkontakt (48) bildende Lippe aufweist.

11. Vorrichtung nach den Ansprüchen 6-10, dadurch gekennzeichnet, daß zwischen Werkzeug (1) und Basisverteiler (25) zum Druckausgleich fungierende Kanäle (31) gebildet sind.

12. Vorrichtung nach den Ansprüchen 6-11, dadurch gekennzeichnet, daß zwischen Schleppdorn (9) und Rohr (7) ein den Druckausgleich gewährleistender Spalt (40) gebildet ist, der mit im Rohr (7) angeordneten Belüftungsbohrungen (53) in Verbindung steht, sowie für den Druckausgleich fungierende, im Bereich der Zentrierung zwischen Schleppdorn (9) und Rohr (7) angeordneten Nuten (41).

13. Vorrichtung nach den Ansprüchen 6-12, dadurch gekennzeichnet, daß zwischen der Düsenlippe (11 oder 13) und Endsaugrohr (14) eine Dehnungsausgleichsvorrichtung in Form einer Tellerfeder (42) angeordnet ist.

14. Vorrichtung nach den Ansprüchen 6-13, dadurch gekennzeichnet, daß die Vorrichtung mit einem Bajonettverschluß (57) auf dem Spaltring (52) befestigt ist und somit eine schnelle Demontage der Vorrichtung gewährleistet.

15. Vorrichtung nach den Ansprüchen 6-14,

dadurch gekennzeichnet, daß der Schleppdorn (9) mit einem isolierenden Stoff, vorzugsweise aus Baumwolle überzogen ist.

16. Vorrichtung nach den Ansprüchen 6-15, dadurch gekennzeichnet, daß der Schleppdorn (9) mit einer isolierenden Keramikbeschichtung überzogen ist.

17. Vorrichtung nach den Ansprüchen 6-16, dadurch gekennzeichnet, daß die konische Oberfläche des Schleppdorns (9) zur Kontaktflächenreduzierung ein Grobgewinde (58) bzw. ein wellenförmiges Profil aufweist.

18. Vorrichtung nach den Ansprüchen 6-17, dadurch gekennzeichnet, daß auf dem Rohr (7) mindestens ein, eine Kontaktfläche (61) bildender Führungsring (60) angeordnet ist.

19. Vorrichtung nach den Ansprüchen 6-18, dadurch gekennzeichnet, daß der Führungsring (60) zur Kontakt-Oberflächenreduzierung ein Grobgewinde (62) aufweist.

20. Vorrichtung nach den Ansprüchen 6-19, dadurch gekennzeichnet, daß der Schleppdorn (9) zur Höhenverstellung eine Befestigungsschraube (49) aufweist.

**Claims**

1. A high-output cooling process for the manufacture of biaxially oriented films of high- and medium molecular weight thermoplastics using the so-called "long neck" mode of operation, on a film blowing extrusion installation comprising an extruder (2) with a blowing head suitable for plasticising and shaping the plastic, with external cooling of the blown film by means of a high-output cooling ring (5), with an internal cooling system and with a sizing cage (19) for guiding the blown film and controlling the expanded width of the film, characterised in that the neck (44) of the film is stabilised and guided shortly before its expansion (45) by a conical, height-adjustable entrainment mandrel (9) positioned immediately upstream of the blown film, and that the high-intensity internal cooling is effective immediately downstream of the entrainment mandrel (9) in the region of the expansion (45) of the blown film.

2. A high-output cooling process according to Claim 1, characterised in that the neck (44) is guided at two locations in the transition region (45), at the conical contact surface (47) and at the point contact (49) of a lower nozzle lip (12), and that the internal cooling is effective immediately downstream of the second point contact (48) in the expanding region of the blown film.

3. A high-output cooling process according to Claims 1 - 2, characterised in that the neck (44) and the transition region (45) are guided at three positions, at the conical contact surface (47), at the point contact (48) and at the contact surface of the guide rings (60), and that the internal cooling is effective immediately downstream of the second point contact in the expansion region of the blown film.

4. A high-output cooling process according to Claims 1 - 3, characterised in that the internal cooling air is guided between coaxial tubes through the entrainment mandrel (9) to the shaped internal lips.

5. A high-output cooling process according to Claims 1 - 4, characterised in that the hot air from the internal cooling is extracted centrally through the entrainment mandrel (9) via the tubes (14) and (8).

6. A device for carrying out the process according to Claims 1 - 5, wherein the film blowing extrusion installation comprises an extruder (2) with a blowing head suitable for plasticising and shaping the plastic, external cooling of the blown film by means of a high-output cooling ring (5), an internal cooling system and a sizing cage (19) for guiding the blown film and controlling the expanded width of the film, wherein a tube (7) is provided, mounted on a tool (1), with an inner tube (8) disposed within the tube (7), which inner tube is led into the tool (1) and is connected to a suction tube (4), characterised in that a conical entrainment mandrel (9) is disposed around the outer tube (7) in the region immediately upstream of the expansion (45) of the blown film, and that an end suction tube (14), which is equipped with nozzle lips (10, 11; 12, 13), is provided immediately downstream of the entrainment mandrel (9) in the region of the expansion (45) of the blown film, wherein internal cooling can be effected immediately downstream of the entrainment mandrel (9) by means of this end suction tube.

7. A device according to Claims 1 - 6, characterised in that a centring device (26) which contains the tube (8) is disposed in the end region of the tube (24) leading into the base distributor (25), wherein at least one cooling channel (27) is formed in the base distributor (25), which cooling channel leads into the cooling channel (28) which is formed by the tube (8) and by the tube (7) mounted on the base distributor (25).

8. A device according to Claims 6 - 7, characterised in that the internal nozzle lip (10, 11 or 12, 13) which accommodates the tube (8) has at least one cooling channel (32).

9. A device according to Claims 6 - 8, characterised in that the outside diameters of the internal nozzle lips (10-11) are congruent with the outside diameter of the conical entrainment mandrel (9).

10. A device according to Claims 6 - 9, characterised in that the internal nozzle lip (12) has a lip projecting beyond the entrainment mandrel (9) and forming a point contact (48).

11. A device according to Claims 6 - 10, characterised in that channels (31) which serve for pressure equalisation are formed between the tool (1) and the base distributor (25).

12. A device according to Claims 6 - 11, characterised in that a gap (40), which is connected to the aeration holes (53) disposed in the tube (7), and which ensures pressure equalisation, is formed between the entrainment mandrel (9) and the tube (7), and slots (41) which serve for pressure equalisation are formed, disposed in the region of the centring device between the entrainment mandrel (9) and the tube (7).

13. A device according to Claims 6 - 12, characterised in that an expansion compensating device in the form of a spring washer (42) is disposed between the nozzle lip (11 or 13) and the end suction tube (14).

14. A device according to Claims 6 - 13, characterised in that the device is fastened on the slit ring (52) by means of a bayonet fixing (57) and thus rapid detachment of the device is ensured.

15. A device according to Claims 6 - 14, characterised in that the entrainment mandrel (9) is covered with an insulating material, preferably cotton wool.

16. A device according to Claims 6 - 15, characterised in that the entrainment mandrel (9) is covered with an insulating ceramic coating.

17. A device according to Claims 6 - 16, characterised in that the conical surface of the entrainment mandrel (9) has a coarse thread (58) or a wave-shaped profile for reducing the area of contact.

18. A device according to Claims 6 - 17, characterised in that at least one guide ring (60), which forms a contact surface (61), is disposed on the tube (7).

19. A device according to Claims 6 - 18, characterised in that the guide ring (60) has a coarse thread (62) for reducing the area of contact.

20. A device according to Claims 6 - 19, characterised in that the entrainment mandrel (9) has a fastening screw (49) for height adjustment.

**Revendications**

1. Procédé de refroidissement à grand rendement pour la fabrication de feuilles bi-orientées formées de matières thermoplastiques ayant un poids moléculaire élevé ou moyen, avec le mode dit de mouvement, comportant un long col, sur une installation de soufflage de feuilles formée d'une extrudeuse (2), avec une tête soufflante, appropriée pour le ramollissement et le façonnage de la matière plastique, comportant un dispositif de refroidissement extérieur de la soufflure de feuille, au moyen d'une bague de refroidissement (5) à grand rendement, comportant un système de refroidissement intérieur ainsi qu'un panier de calibrage (19) pour le guidage de la soufflure de feuille et la commande de la largeur à plat de la feuille, caractérisé en ce que le col de feuille (44) est stabilisé et guidé, juste avant son élargissement (45), par une broche conique d'entraînement (9) réglable en hauteur et positionnée directement à l'avant de la soufflure de feuille, et que le dispositif de refroidissement intérieur très intense agit directement à l'arrière de la broche d'entraînement (9), dans la zone de l'élargissement (45) de la soufflure de feuille.

2. Procédé de refroidissement à grand rendement selon la revendication 1, caractérisé en ce que le col (44) est guidé à deux endroits dans la zone de transition (45), sur la face conique de contact (47) et au point de contact (48) d'une lèvre inférieure de tuyère (12), et que le dispositif de refroidissement intérieur agit directement à l'arrière du deuxième point de contact (48) dans la zone d'élargissement de la soufflure de feuille.

3. Procédé de refroidissement à grand rendement selon les revendications 1-2, caractérisé en ce que le col (44) et la zone de transition (45) sont guidés à trois endroits, sur la face conique de contact (47), au point de contact (48) et sur la face de contact des bagues de guidage (60), et que le dispositif de refroidissement intérieur agit directement à l'arrière du deuxième point de contact dans la zone d'élargissement de la soufflure de feuille.

4. Procédé de refroidissement à grand rendement selon les revendications 1-3, caractérisé en ce que l'air du dispositif de refroidissement intérieur est guidé entre des tuyaux coaxiaux dans la broche d'entraînement (9) en direction des lèvres intérieures façonnées.

5. Procédé de refroidissement à grand rendement selon les revendications 1-4, caractérisé en ce que l'air chaud du dispositif de refroidissement intérieur est aspiré au centre à travers la broche d'entraînement (9) par l'intermédiaire des tubes (14) et (8).

6. Dispositif pour la mise en oeuvre du procédé selon les revendications 1-5, où l'installation de soufflage de feuilles est formée d'une extrudeuse (2) comportant une tête soufflante, appropriée pour le ramollissement et le façonnage de la matière plastique, un dispositif de refroidissement extérieur de la soufflure de feuille au moyen d'une bague de refroidissement à grand rendement (5), un système de refroidissement intérieur ainsi qu'un panier de calibrage (19) pour le guidage de la soufflure de feuille et la commande de la largeur à plat de la feuille, dispositif dans lequel est prévu un tube (7) placé sur un outil (1) et comportant un tube intérieur (8) disposé dans celui-ci, introduit dans l'outil (1) et communiquant avec un tube d'aspiration (4), caractérisé en ce qu'une broche conique d'entraînement (9) est disposée autour du tube extérieur (7), directement dans la zone située à l'avant de l'élargissement (45) de la soufflure de feuille, et qu'un tube final d'aspiration (14) pourvu de lèvres de tuyère (10, 11; 12, 13) est prévu directement à l'arrière de la broche d'entraînement (9), dans la zone de l'élargissement (45) de la soufflure de feuille, grâce à quoi un dispositif de refroidissement intérieur peut être activé directement à l'arrière de la broche d'entraînement (9).

7. Dispositif selon la revendication 6, caractérisé en ce qu'un dispositif de centrage (26) recevant le tube (8) est disposé dans la zone d'extrémité du tube (24) menant au distributeur de base (25), au moins un canal de refroidissement (27) étant formé dans le distributeur de base (25), qui mène au canal au refroidissement (28) qui est formé du tube (8) et du tube (7) placé sur le distributeur de base (25).

8. Dispositif selon les revendications 6-7, caractérisé en ce que les lèvres intérieures de tuyère (10, 11 ou 12, 13) recevant le tube (8) comportent au moins un canal de refroidissement (32).

9. Dispositif selon les revendications 6-8, caractérisé en ce que les diamètres extérieurs des lèvres intérieures de tuyère (10, 11) coïncident avec le diamètre extérieur de la broche conique d'entraînement (9).

10. Dispositif selon les revendications 6-9, caractérisé en ce que la lèvre intérieure de tuyère (12) comporte une lèvre dépassant la broche d'entraînement (9) et formant un point de contact (48).

11. Dispositif selon les revendications 6-10, caractérisé en ce que des canaux (31) servant à l'équilibre de pression sont formés entre l'outil (1) et le distributeur de base (25).

12. Dispositif selon les revendications 6-11, caractérisé en ce qu'une fente (40) garantissant l'équilibre de pression est formée entre la broche d'entraînement (9) et le tube (7), qui communique avec des trous de ventilation (53) disposés dans le tube (7), ainsi que des rainures (41) servant à l'équilibre de pression, disposées entre la broche d'entraînement (9) et le tube (7), dans la zone du dispositif de centrage.

13. Dispositif selon les revendications 6-12, caractérisé en ce qu'un dispositif de compensation sous la forme d'un ressort Belleville (42) est disposé entre la lèvre de tuyère (11 ou 13) et le tube final d'aspiration (14).

14. Dispositif selon les revendications 6-13, caractérisé en ce que le dispositif est fixé sur la bague à fente (52) au moyen d'une fermeture à baïonnette (57) et garantit ainsi un démontage rapide du dispositif.

15. Dispositif selon les revendications 6-14, caractérisé en ce que la broche d'entraînement (9) est recouverte d'un matériau isolant, de préférence en coton.

16. Dispositif selon les revendications 6-15, caractérisé en ce que la broche d'entraînement (9) est recouverte d'un revêtement céramique isolant.

17. Dispositif selon les revendications 6-16, caractérisé en ce que la surface conique de la broche d'entraînement (9) comporte un filet à pas gros (58) et un profil ondulé pour la réduction des surfaces de contact.

18. Dispositif selon les revendications 6-17, caractérisé en ce qu au moins une bague de guidage (60) formant une surface de contact (61) est disposée sur le tube (7).

19. Dispositif selon les revendications 6-18, caractérisé en ce que la bague de guidage (60) comporte un filet à pas gros (62) pour la réduction des surfaces de contact.

20. Dispositif selon les revendications 6-19, caractérisé en ce que la broche d'entraînement (9) comporte une vis de fixation (49) pour le réglage en hauteur.

Fig.1

Fig.2

15
20
50
14
42
45
51
13
12
54
58
9
48
32a
41
49
47
53
B
44
40
56
31
6
5
8
7
55
25
23
24
1
57
52

Fig.3

Fig.4

Fig.5

Fig.6

49

54

9

53

40

7

Fig.7

41

Fig.8

Fig.9

49

54

Fig. 10

9

53

40

7

25

23    31    57    Fig. 11

44    7    8    60

61

62

Fig. 12